# EUROPEAN PATENT APPLICATION

(11) **EP 4 776 050 A1**
(43) Date of publication of application: **15.07.2026**
(21) Application number: 24922472.6
(22) Date of filing: 18.11.2024
(51) Int. Cl.: G02B 27/00, G06F 3/01, G02B 27/01, G02B 27/28

(54) **AUGMENTED REALITY DEVICE AND METHOD FOR DETECTING USER'S GAZE**

(30) Priority: 31.01.2024 KR 20240015184
(71) Applicant: Samsung Electronics Co., Ltd., Suwon-si, Gyeonggi-do 16677 (KR)
(72) Inventor: RYU, Jaeyeol, Suwon-si, Gyeonggi-do 16677 (KR); KOO, Bonkon, Suwon-si, Gyeonggi-do 16677 (KR); CHOI, Myongjo, Suwon-si, Gyeonggi-do 16677 (KR); KWAK, Kyusub, Suwon-si, Gyeonggi-do 16677 (KR); KIM, Doyoun, Suwon-si, Gyeonggi-do 16677 (KR); SHIN, Sunghwan, Suwon-si, Gyeonggi-do 16677 (KR); LEE, Kyookeun, Suwon-si, Gyeonggi-do 16677 (KR)
(74) Representative: Appleyard Lees IP LLP
(86) International application number: PCT/KR2024/096627
(87) International publication number: WO 2025/164964

(57) **Abstract**

Provided are an augmented reality (AR) device and method for detecting a gaze of a user. The AR device may include a waveguide, a support part configured to fix the AR device to a face of the user of the AR device, a light receiver provided on the support part, a first polarization plate and a second polarization plate configured to linearly polarize transmitted light, and at least one processor configured to obtain gaze information of a user, based on light reflected from an eyeball of the user and obtained via the light receiver, wherein noise light traveling toward the light receiver is linearly polarized in a first direction by the first polarization plate, and light linearly polarized from the noise light is blocked by the second polarization plate.

## Description

### Technical Field

The disclosure relates to an augmented reality (AR) device and method for detecting a gaze of a user, and more particularly, to an AR device and method for removing noise from external light while detecting a gaze of a user.

### Background Art

Augmented reality (AR) refers to a technology for displaying an image by overlaying a virtual image in a physical space or on a real world object. An AR device may be worn on a face or a head of a user so as to allow the user to view both a real scene and a virtual image. For example, the glasses-type device may use a see-through display such as a waveguide.

With recent developments in AR technology, wearable devices with various shapes are released or to be released. For example, in a new glasses-type device, a camera may be placed on the temple of glasses so as to track a gaze of a user. In this case, as a direction of the camera faces outside the glasses, external light coming from the outside of the glasses may act as noise. As an amount of noise increases, accuracy of gaze detection using the camera deteriorates.

### DISCLOSURE OF INVENTION

### SOLUTION TO PROBLEM

According to an aspect of the disclosure, there is provided an augmented reality (AR) device including: a waveguide, a support part configured to fix the AR device to a face of a user, a light receiver provided in the support part, at least one processor configured to obtain gaze information of the user, based on light reflected from an eyeball of the user and obtained by the light receiver, a first polarization plate configured to polarize noise light traveling toward the light receiver, and a second polarization plate configured to block the polarized noise light from the first polarization plate from reaching the light receiver.

According to another aspect of the disclosure, there is provided a method of tracking a gaze of a user, the method including: obtaining gaze information of the user, based on light reflected from an eyeball of the user and obtained by a light receiver, linearly polarizing, by a first polarization plate, noise light traveling toward the light receiver, and blocking, by a second polarization plate, the linearly polarized noise light from reaching the light receiver.

According to another aspect of the disclosure, there is provided a computer-readable recording medium having recorded thereon a program for performing, on a computer, a method including obtaining gaze information of the user, based on light reflected from an eyeball of the user and obtained by a light receiver, linearly polarizing, by a first polarization plate, noise light traveling toward the light receiver, and blocking, by a second polarization plate, the linearly polarized noise light from reaching the light receiver.

### BRIEF DESCRIPTION OF DRAWINGS

FIG. 1 is a diagram illustrating an example of an augmented reality (AR) device, according to an embodiment of the disclosure.
FIG. 2 is a block diagram of an AR device, according to an embodiment of the disclosure.
FIG. 3 is a conceptual diagram for describing in detail a configuration of an AR device, according to an embodiment of the disclosure.
FIG. 4 is a conceptual diagram for describing a method of blocking noise, by a configuration of an AR device, according to an embodiment of the disclosure.
FIG. 5 is a conceptual diagram for describing a procedure in which noise is blocked, according to an embodiment of the disclosure.
FIG. 6 is a conceptual diagram for describing a method of blocking noise in an AR device, according to an embodiment of the disclosure.
FIG. 7 is a conceptual diagram for describing a configuration of an AR device, according to an embodiment of the disclosure.
FIG. 8 is a conceptual diagram for describing a configuration of an AR device, according to an embodiment of the disclosure.
FIG. 9A is a conceptual diagram for describing a method of blocking noise, by a configuration of an AR device, according to an embodiment of the disclosure.
FIG. 9B is a conceptual diagram for describing a method of securing a field of view of a user, by a configuration of an AR device, according to an embodiment of the disclosure.
FIG. 10 is a conceptual diagram for describing a process of blocking noise, according to an embodiment of the disclosure.
FIG. 11 is a flowchart for describing an operation of blocking noise, according to an embodiment of the disclosure.

### MODE FOR THE INVENTION

Hereinafter, the disclosure will now be described more fully with reference to the accompanying drawings for one of ordinary skill in the art to be able to perform an embodiment of the disclosure without difficulty. The disclosure may, however, be embodied in many different forms and should not be construed as being limited to an embodiment of the disclosure set forth herein. In the drawings, parts not related to an embodiment of the disclosure are not illustrated for clarity of explanation, and like reference numerals denote like elements throughout the disclosure.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween. Also, when a part "includes" or "comprises" an element, unless there is a particular description contrary thereto, the part can further include other elements, not excluding the other elements.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure. As used herein, an element expressed as, for example, '...er (or)', '... unit', '... module', or the like, may denote a unit in which two or more elements are combined into one element or one element is divided into two or more elements according to its function. In addition, each element to be described below may additionally perform, in addition to its primary function, some or all of functions of another element, and some of the primary functions of each element may be exclusively performed by another element. According to one or more embodiments of the disclosure, 'augmented reality (AR)' may refer to displaying a virtual image and a real scene together in a physical space.or displaying a real world object and a virtual image together in a physical space.

In addition, augmented reality devices are devices that may express 'augmented reality', and may include not only glasses-type augmented reality glasses that users wear on the face, as well as a head mounted display (HMD) apparatus or an augmented reality helmet (HMD) worn on the head.

A 'real scene' may refer to a scene of a real world a user views via an AR device, and may include a real world object. Also, a 'virtual image' may refer to an image generated by an optical engine, and may include both a still image and a dynamic image. The virtual image may be observed with the real scene, and may be information about a real world object in the real scene, or information about an operation of the AR device or an image of a control menu, etc.

Therefore, an AR device according to example embodiments of the disclosure includes an optical engine configured to generate a virtual image formed of light generated by a light source, and a waveguide including a transparent material to guide the virtual image generated by the optical engine to eyes of a user and to allow the user to view a scene of a real world together. As described above, the AR device which has to observe a scene of a real world requires an optical element to change a path of light basically having linearity, so as to guide the light generated by the optical engine to the eyes of the user via the waveguide. In this regard, the path of light may be changed by using reflection using a mirror, etc. or may be changed due to diffraction using a diffraction element such as a diffractive optical element (DOE), a holographic optical element (HOE), etc.

Hereinafter, the disclosure will now be described with reference to drawings.

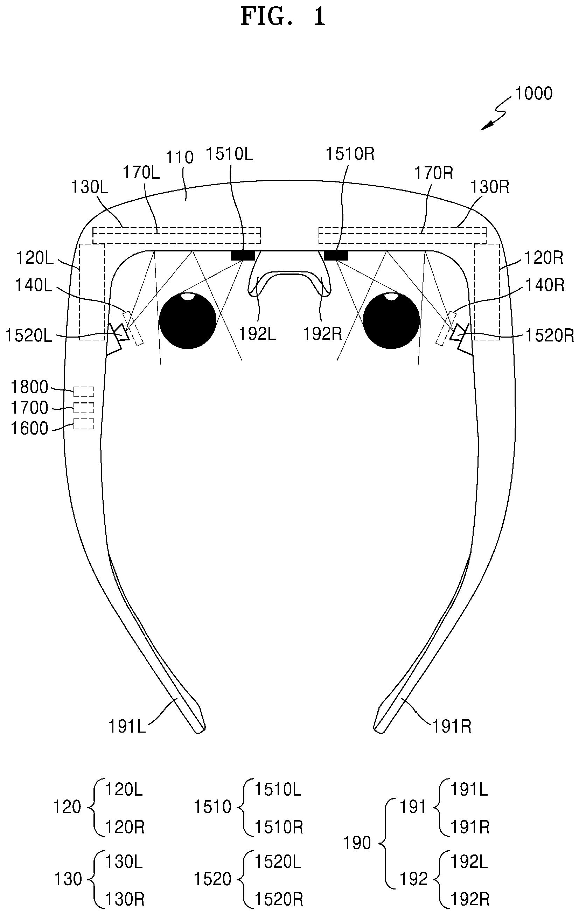

FIG. 1 is a diagram illustrating an example of an AR device, according to an embodiment of the disclosure.

Referring to FIG. 1, an AR device 1000 may block noise light transferred from an external light source. For example, the AR device 1000 may include a first polarization plate 130 and a second polarization plate 140 configured to block the noise light. The noise light may include light generated in the external light source. The noise light may include light traveling straight from the external light source toward a light receiver 1520. The noise light may include light that is not reflected by eyeballs of a user but travels from the external light source toward the light receiver 1520.

According to an embodiment of the disclosure, the AR device 1000 may receive light via the light receiver 1520, and may detect a gaze of the user, based on the received light. The received light may include light obtained by filtering the noise light using the first polarization plate 130 and the second polarization plate 140.

For example, light traveling toward a light receiver may include signal light and noise light. The signal light may include light reflected by eyeballs of a user so as to be used in detecting a gaze of the user. The noise light may not be reflected by the eyeballs of the user, and may include unnecessary light in detecting the gaze of the user. For example, the noise light may include light that travels straight from an external light source toward the light receiver.

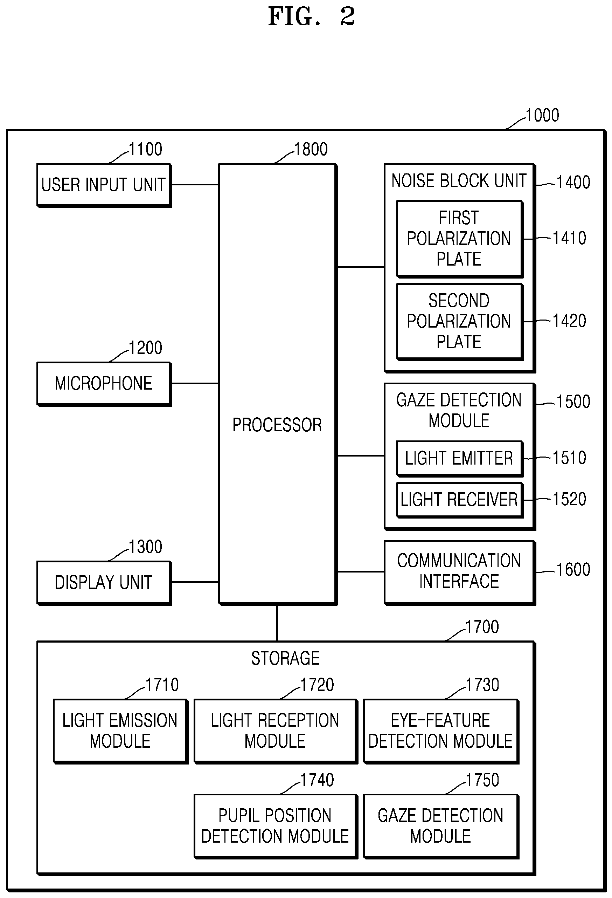

For example, FIG. 1 schematically shows a configuration of the AR device 1000, according to an embodiment of the disclosure, and FIGS. 2 to 10 particularly show a method of blocking noise, according to an embodiment of the disclosure.

The AR device 1000 is a glasses-type display device which may include a glasses-type body configured to be wearable on a user.

The glasses-type body may include a frame 110 and a support part 190 (190 and 192), and the support part 190 may be used to fix the AR device 1000 to a face of the user of the AR device 1000. The support part 190 may extend from the frame 110 so as to be used in placing the AR device 1000 on a head of the user. The support part 190 may include a temple 191 (191L and 191R) and a nose support part 192 (192L and 192R).

The temple 191 may extend from the frame 110 around a waveguide 170 so as to be used in fixing the AR device 1000 to the head of the user. For example, the temple 191 may be provided at a side part of the glasses-type body. The temple 191 may extend from the frame 110 so as to be used in placing the AR device 1000 to ears of the user.

The nose support part 192 may extend from the frame 110 so as to be used in placing the AR device 1000 on a nose part of the user, and may include, for example, a nose bridge and nose pads, but the disclosure is not limited thereto.

Also, the waveguide 170 having the first polarization plate 130 attached thereto may be arranged at the frame 110. The frame 110 may be formed to surround an outer circumferential surface of the waveguide 170, and the waveguide 170 may be configured to receive an input of transmitted light in an input area and to output at least a portion of the input light in an output area. The waveguide 170 may include a waveguide for left-eye 170L and a waveguide for right-eye 170R.

The waveguide 170 is configured to transmit first light of a virtual image generated by an optical engine 120 and light of an external scene to a pupil of the user. The waveguide 170 may have a flat plate shape. The waveguide 170 may be formed as a single-layer or multi-layer structure of a transparent material through which light may be internally reflected to be propagated. Here, a transparent material refers to a material through which light in the visible light band may pass, and the transparency thereof may not be 100%, and the transparent material may have a preset color. According to an embodiment, waveguide 170 may include a transparent material, and as such, the user may not only view virtual images through the AR device 1000 but also view real scenes. Thus, the AR device 1000 may implement augmented reality. The waveguide 170 may be provided on each of the left and right eyes corresponding to the optical engine 120, or may be provided on only one side.

Also, the optical engine 120 of a projector configured to project display light including an image may include an optical engine for left eye 120L and an optical engine for right eye 120R. The optical engine for left eye 120L and the optical engine for right eye 120R may be located at both sides of the AR device 1000. Alternatively, the optical engine 120 may be included in a center portion around the nose support part 192 of the AR device 1000. Light emitted from the optical engine 120 may be displayed via the waveguide 170.

The light receiver 1520 of a gaze detection module 1500 may be installed at the support part 190. The light receiver 1520 may be placed at an inner side part of the support part 190 of the AR device 1000, the inner side part being between the support part 190 and the eyes of the user. The light receiver 1520 may be placed at the support part 190 of the AR device 1000 so as to face the waveguide 170. For example, in order to emit and receive IR light without interruption such as hair of the user, the light receiver 1520 may be placed at a side surface of the temple 191 of the AR device 1000 so as to be distant from the frame 110 by about 10mm to about 15mm.

A light emitter 1510 of the gaze detection module 1500 may be placed at an inner side part of the frame 110, the inner side part being between the frame 110 of the AR device 1000 and the eyes of the user. The light emitter 1510 may be placed at the frame 110 of the AR device 1000 so as to emit light toward eyeballs of the user. The light emitter 1510 may be placed at a position in an inner side of the frame 110 so as not to obstruct a field of view of the user, the position being distant from a front field of view of the user. For example, the light emitter 1510 may be placed at the inner side of the frame 110 so as to be adjacent to the nose support part 192

While FIG. 1 illustrates that the light emitter 1510 is placed at the inner side of the frame 110 of the AR device 1000, the position of the light emitter 1510 does not limit the technical concept of the disclosure. For example, the light emitter 1510 may be placed at an inner side part of the support part 190 of the AR device 1000, the inner side part being between the support part 190 and the eyes of the user.

The first polarization plate 130 is configured to linearly polarize transmitted light. The first polarization plate 130 may transmit a light component of external incident light which vibrates in a first direction, and may block a light component that vibrates in a direction different from the first direction. For example, light emitted from the external light source in the outside of the AR device 1000 may be polarized in the first direction by passing through the first polarization plate 130.

The first polarization plate 130 may include a first polarization plate for left-eye 130L and a first polarization plate for right-eye 130R. The first polarization plate for left-eye 130L and the waveguide for left-eye 170L may be placed at a position corresponding to a left eye of the user, and the first polarization plate for right-eye 130R and the waveguide for right-eye 170R may be placed at a position corresponding to a right eye of the user. For example, the first polarization plate for left-eye 130L may be attached to the waveguide for left-eye 170L, or the first polarization plate for right-eye 130R may be attached to the waveguide for right-eye 170R, but the disclosure is not limited thereto. Also, for example, the first polarization plate for left-eye 130L may be coated on an inner side of the waveguide for left-eye 170L so as to be attached to the waveguide for left-eye 170L, or the first polarization plate for right-eye 130R may be coated on an inner side surface of the waveguide for right-eye 170R so as to be attached to the waveguide for right-eye 170R.

The second polarization plate 140 is configured to linearly polarize transmitted light. The second polarization plate 140 is configured to filter the light component in a second direction, the light component having been polarized in the first direction by the first polarization plate 130. The first direction and the second direction may be perpendicular to each other. The second polarization plate 140 may polarize the light component, which has been polarized in the first direction by the first polarization plate 130, in the second direction, and thus, may block the light component polarized in the first direction. The second polarization plate 140 may transmit a light component of external incident light which vibrates in the second direction, and may block a light component that vibrates in a direction different from the second direction. For example, the light component polarized in the first direction by the first polarization plate 130 of the AR device 1000 may be blocked by passing through the second polarization plate 140.

The first polarization plate 130 and the second polarization plate 140 are configured to linearly polarize transmitted light in directions being perpendicular to each other. A method of linearly polarize transmitted light in directions being perpendicular to each other does not limit the technical concept of the disclosure. For example, the first polarization plate 130 and the second polarization plate 140 may have the same configuration in which placement varies to linearly polarize transmitted light in directions being perpendicular to each other. The first polarization plate 130 and the second polarization plate 140 may be sequentially placed on a path on which noise light directly emitted from the external light source toward the light receiver 1520 reaches the light receiver 1520.

FIG. 2 is a block diagram of an AR device, according to an embodiment of the disclosure.

Referring to FIG. 2, the AR device 1000 according to an embodiment of the disclosure may include a user input unit 1100, a microphone 1200, a display unit 1300, a noise block unit 1400, a gaze detection module 1500, a communication interface 1600, a storage 1700, and a processor 1800. Also, the noise block unit 1400 may include a first polarization plate 1410 and a second polarization plate 1420, and the gaze detection module 1500 may include the light emitter 1510 and the light receiver 1520.

The user input unit 1100 indicates a means through which a user inputs data for controlling the AR device 1000. For example, the user input unit 1100 may include at least one of a key pad, a dome switch, a touch pad (using a touch capacitance method, a pressure-resistive layer method, an infrared sensing method, a surface ultrasonic conductive method, an integral tension measuring method, a piezo effect method, etc.), a jog wheel, or a jog switch, but the disclosure is not limited thereto.

The microphone 1200 receives an input of an external sound signal and processes it into electric voice data. For example, the microphone 1200 may receive the sound signal from an external device or a speaker. Various noise removal algorithms may be used to remove noise occurring in a process of receiving an input of the external sound signal. The microphone 1200 may receive a user's voice input for controlling the AR device 1000.

The display unit 1300 displays and outputs information processed by the AR device 1000. For example, the display unit 1300 may display information related to a service provided based on a user interface for photographing an environment of the AR device 1000 and a captured image of the environment of the AR device 1000.

According to an embodiment of the disclosure, the display unit 1300 may provide an AR image. According to an embodiment of the disclosure, the display unit 1300 may include the waveguide 170 and the optical engine 120, as shown in FIG. 1. The waveguide 170 may include a transparent material through which a partial area of a rear surface is viewed, when a user wears the AR device 1000. The waveguide 170 may be formed as a flat plate with a single-layer or multi-layer structure including a transparent material through which light may be internally reflected to be propagated. The waveguide 170 may face a light exit surface of the optical engine 120, and thus, may receive an input of light of a virtual image emitted from the optical engine 120. Here, a transparent material refers to a material through which light may pass, and the transparency thereof may not be 100 %, and the transparent material may have a preset color. According to an embodiment of the disclosure, as the waveguide 170 includes the transparent material, a user may not only view a virtual object of a virtual image but also may view an external real scene through which the display unit 1300, so that the waveguide 170 may also be referred to as a see-through display. The display unit 1300 may provide an AR image by outputting a virtual object of a virtual image via a waveguide. In an example case in which the AR device 1000 is a glasses-type display device, the display unit 1300 may include a left display unit and a right display unit.

The noise block unit 1400 may include the first polarization plate 1410 and the second polarization plate 1420 for blocking noise light occurring in an external light source. Each of the first polarization plate 1410 and the second polarization plate 1420 may filter out, from external incident light, a polarization component vibrating in one direction. The first polarization plate 1410 may be configured to linearly polarize incident light in a first direction, and the second polarization plate 1420 may be configured to linearly polarize incident light in a second direction being perpendicular to the first direction. The first polarization plate 1410 may firstly polarize noise light, and the second polarization plate 1420 may secondly polarize the firstly-polarized noise light, such that the noise light may be blocked.

The first polarization plate 1410 and the second polarization plate 1420 may be sequentially placed on a path on which noise light directly emitted from the external light source toward the light receiver 1520 reaches the light receiver 1520. Noise light directly emitted from an external light source toward the light receiver 1520 may be firstly polarized by the first polarization plate 1410 and then may be secondly polarized by the second polarization plate 1420.

The first polarization plate 1410 may be placed on the waveguide 170. For example, the first polarization plate 1410 may be placed to be attached to the waveguide 170. The first polarization plate 1410 may be placed on an external surface of the waveguide 170, but this does not limit the technical concept of the disclosure. For example, the first polarization plate 1410 may be placed on an inner side of the waveguide 170.

The second polarization plate 1420 may be placed on the light receiver 1520. For example, the second polarization plate 1420 may be placed in front of a lens of the light receiver 1520 As another example, the second polarization plate 1420 may be included as an inner configuration of the light receiver 1520, and in this regard, the second polarization plate 1420 and a light-receiving sensor may be sequentially placed on a path of noise light so as to prevent the noise light from reaching the light-receiving sensor of the light receiver 1520.

The gaze detection module 1500 may include the light emitter 1510 configured to emit infrared (IR) light for detecting a gaze of a user and the light receiver 1520 configured to receive IR light, and may detect data related to a gaze of a user who wears the AR device 1000. For example, the light emitter 1510 may include an IR light source.

The light emitter 1510 of the gaze detection module 1500 may emit IR light toward an eye of the user. The emit IR light may be sequentially reflected by the eye of the user and the waveguide 170. The light emitter 1510 may be placed at a position of the AR device 1000, at which IR light can be emitted toward an eye of a user. For example, the light emitter 1510 may be located at the nose support part 192 of FIG. 1 which supports the AR device 1000 to a face of the user.

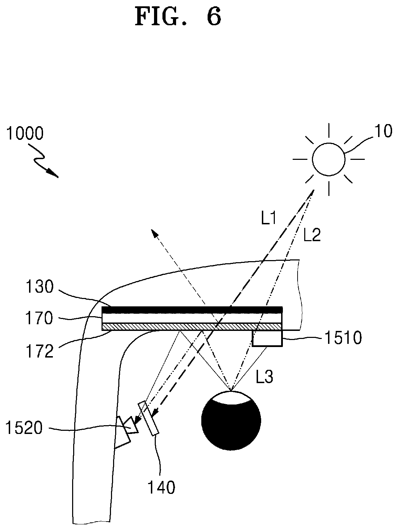

Also, IR light emitted from the light emitter 1510 may be reflected from an eye of the user and may be incident on the waveguide 170. In an example case in which the emitted IR light passes through the waveguide 170, it may be difficult to detect a gaze of the user. Therefore, in order to allow IR light to be mostly reflected from the waveguide 170, a light reflector (see reference numeral 172 of FIG. 6) may be attached on the inner side of the waveguide 170. The light reflector may be coated on the waveguide 170.

For example, IR light reflected from the eyes of the user may be reflected by the waveguide 170 or the light reflector, and thus, may be received by the light receiver 1520. IR light traveling to the eyes of the user may be reflected from the eyes of the user, and the IR light reflected from the eyes of the user may be reflected by the waveguide 170 or the light reflector, and the light receiver 1520 may receive the IR light reflected by the light reflector.

According to an embodiment of the disclosure, the light receiver 1520 may include a camera, an image sensor, a detector, etc. which detect light.

For example, the light receiver 1520 may be a two-dimensional (2D) sensor assembled in an array form including a plurality of pixels arranged in a matrix, and each of the plurality of pixels may include at least one photoelectric conversion element. The light receiver 1520 may detect light by using a photoelectric conversion element, and may output an image signal that is an electrical signal according to the detected light.

The light receiver 1520 may be placed at a position of the AR device 1000 so as to receive IR light reflected from the light reflector. For example, the light receiver 1520 may be located at the support part 190 of FIG. 2 which supports the AR device 1000 on a face of the user, as the temple 191 and the nose support part 192 of FIG. 1. Also, for example, the nose support part 192 of FIG. 2 may include the nose bridge and the nose pads. The bridge and the nose pads may be formed as one body, but the disclosure is not limited thereto.

The position of the light emitter 1510 is merely an example, and does not limit the technical concept of the disclosure. For example, the light emitter 1510 may be located at the temple 191 of FIG. 1 which supports the AR device 1000 on a face of the user. The light emitter 1510 may emit IR light toward the light reflector so as to allow the IR light reflected from the light reflector attached on the inner side of the waveguide 170 to travel to the eyes of the user. The light emitter 1510 may emit IR light toward the light reflector, the emitted IR light may be reflected by the light reflector, and the reflected IR light may travel to the eyes of the user. The light emitter 1510 may be placed at a position of the AR device 1000 so as to emit IR light toward the light reflector.

IR light reflected from the eyes of the user may be reflected by the light reflector, and thus, may be received by the light receiver 1520 of the gaze detection module 1500. IR light traveling to the eyes of the user may be reflected from the eyes of the user, the IR light reflected from the eyes of the user may be reflected by the light reflector, and the light receiver 1520 may receive the IR light reflected by the light reflector.

The light receiver 1520 may be placed at a position of the AR device 1000 so as to receive IR light reflected from the light reflector. For example, the light receiver 1520 may be located at the support part 190 of FIG. 2 which supports the AR device 1000 on a face of the user, as the temple 191 and the nose support part 192 of FIG. 2. Also, for example, the nose support part 192 of FIG. 2 may include the nose bridge and the nose pads. The bridge and the nose pads may be formed as one body, but the disclosure is not limited thereto.

The light emitter 1510 may be an IR light-emitting diode (IR LED), and the light receiver 1520 may be an IR camera configured to capture IR light. In this case, the IR camera may photograph the eyes of the user by using IR light reflected by the waveguide 170 or the light reflector. In an example case in which the light emitter 1510 is the IR LED, and the light receiver 1520 is the IR camera, the light emitter 1510 may emit IR light of planar light toward the eyes of the user, and the light receiver 1520 may receive the IR light of planar light which is sequentially reflected from the eyes of the user, and the waveguide 170 or the light reflector. The planar light may be light emitted in a plane form, and an area to which the planar light is to be emitted may be set to cover the eyes of the user.

In an example case in which the light emitter 1510 is an IR scanner and the light receiver 1520 is an IR detector, the light emitter 1510 may emit IR light of point light or line light toward the eyes of the user, and the light receiver 1520 may receive the IR light of point light or line light which is reflected from the eyes of the user. In this case, the light emitter 1510 may sequentially emit the IR light while moving in a light emission direction of the light emitter 1510 so as to allow the IR light of point light or line light to cover a space where the eyes of the user exist. The IR scanner may be configured as a Micro-Electro Mechanical Systems (MEMS) mirror capable of reflecting IR light by controlling a direction of the IR light emitted from the IR LED, and is described as the IR scanner. Also, according to an embodiment, the IR detector may be installed in a manner that a plurality of photo diodes are installed at parts at which detection of light is requested, and is described as the IR detector.

In an example case in which the AR device 1000 is a glasses-type device, the light receiver 1520 may be placed at the temple 191 of the AR device 1000. For example, referring to FIG. 1, the light receiver 1520 may be placed at an inner side part of the temple 191 of the AR device 1000, the inner side part being between the temple 191 and the eyes of the user. For example, referring to FIG. 1, the light receiver 1520 may be placed at a side surface of the temple 191 of the AR device 1000 so as to be distant from the frame 110 by about 10mm to about 15mm. The light receiver 1520 may be placed at the temple 191 of the AR device 1000 so as to face the waveguide 170.

Also, the light emitter 1510 may be placed at the nose support part 192 of the AR device 1000. The light emitter 1510 may be placed at an inner side part of the nose support part 192 of the AR device 1000, the inner side part being between the nose support part 192 and the eyes of the user. For example, referring to FIG. 1, the light emitter 1510 may be placed at a side surface of the nose support part 192 of the AR device 1000 so as to be distant from the frame 110 by about 10mm to about 15mm. The light emitter 1510 may be placed at the nose support part 192 of the AR device 1000 so as to face the eyes of the user.

Referring to FIG. 1, in an example case in which the AR device 1000 is the glasses-type device, the light emitter 1510 and the light receiver 1520 may be placed at the temple 191 of the AR device 1000. For example, referring to FIG. 1, the light emitter 1510 and the light receiver 1520 may be placed at an inner side part of the temple 191 of the AR device 1000, the inner side part being between the temple 191 and the eyes of the user. For example, referring to FIG. 1, the light emitter 1510 and the light receiver 1520 may be placed at a side surface of the temple 191 of the AR device 1000 so as to be distant from the frame 110 by about 10mm to about 15mm. The light emitter 1510 and the light receiver 1520 may be placed at the temple 191 of the AR device 1000 so as to face the waveguide 170.

The gaze detection module 1500 may provide the processor 1800 with data related to a gaze of the eyes of the user, and the processor 1800 may obtain gaze information of the user, based on the data related to the gaze of the eyes of the user. The data related to the gaze of the eyes of the user is data obtained by the gaze detection module 1500, and may include a type (e.g., point light, line light, planar light) of IR light emitted from the light emitter 1510, a characteristic of the IR light emitted from the light emitter 1510, data about an emission area of the IR light emitted from the light emitter 1510, and data indicating a characteristic of IR light received by the light receiver 1520. Also, the gaze information of the user may be information related to the gaze of the eyes of the user, may be generated by analyzing the data related to the gaze of the eyes of the user, and may include, for example, information about the position of the user's pupil, the position of the center point of the pupil, the position of the user's iris, the center of the user's eye, the position of the user's eye glint feature point, the user's gaze point, and the user's eye gaze direction, but the disclosure is not limited thereto. The user's eye gaze direction may be, for example, the direction of the gaze of the eyes from the center of the eyes of the user toward the gaze point at which the user gazes. For example, the user's eye gaze direction may be represented by the value of a vector from the center of the user's left eye toward the gaze point and the value of a vector from the center of the user's right eye toward the gaze point, but the disclosure is not limited thereto. According to an embodiment of the disclosure, the gaze detection module 1500 may detect the data related to the gaze of the eyes of the user who is wearing the AR device 1000, at preset time intervals.

The communication interface 1600 may transmit and receive, to and from an external device and a server, data for receiving a provision of a service related to the AR device 1000.

The storage 1700 may store a program to be executed by the processor 1800 to be described below, and may store data input to the AR device 1000 or data output from the AR device 1000.

The storage 1700 may include at least one of an internal memory or an external memory. The internal memory may include, for example, at least one of a volatile memory (e.g., dynamic RAM (DRAM), static RAM (SRAM), synchronous dynamic RAM (SDRAM), or the like), a non-volatile memory (e.g., one-time programmable ROM (OTPROM), programmable ROM (PROM), erasable and programmable ROM (EPROM), electrically erasable and programmable ROM (EEPROM), mask ROM, flash ROM, or the like), a hard disk drive (HDD), or a solid state drive (SSD). According to an embodiment of the disclosure, the processor 1800 may load a command or data received from at least one of the non-volatile memory or other elements into the volatile memory and may process the same. Also, the processor 1800 may store data received or generated from other elements in a non-volatile memory. The external memory may include, for example, at least one of Compact Flash (CF), Secure Digital (SD), Micro Secure Digital (Micro-SD), Mini Secure Digital (Mini-SD), extreme Digital (xD), or Memory Stick.

According to an embodiment, programs stored in the storage 1700 may be classified into a plurality of modules according to their functions. For example, the storage 1700 may store software codes and/or instruction set of performing various functions or operations. For example, the plurality of modules may include, but is not limited to, a light emission module 1710, a light reception module 1720, an eye-feature detection module 1730, a pupil position detection module 1740, and a gaze detection module 1750. For example, the gaze detection module 1500 may include memory, and in this case, the light emission module 1710 and the light reception module 1720 may be stored as firmware in the memory included in the gaze detection module 1500.

The processor 1800 may control all operations of the AR device 1000. For example, the processor 1800 may generally control, by executing the programs stored in the storage 1700, the user input unit 1100, the microphone 1200, the display unit 1300, the light reflector, the gaze detection module 1500, the communication interface 1600, the storage 1700, etc.

The processor 1800 may determine the gaze point and the gaze direction of the user by executing the light emission module 1710, the light reception module 1720, the eye-feature detection module 1730, the pupil position detection module 1740, and the gaze detection module 1750 which are stored in the storage 1700.

According to an embodiment of the disclosure, the AR device 1000 may include a plurality of processors 1800, and the light emission module 1710, the light reception module 1720, the eye-feature detection module 1730, the pupil position detection module 1740, and the gaze detection module 1750 which are stored in the storage 1700 may be executed by the plurality of processors 1800.

For example, some portions of the light emission module 1710, the light reception module 1720, the eye-feature detection module 1730, the pupil position detection module 1740, and the gaze detection module 1750 may be executed by a first processor, and other portions of the light emission module 1710, the light reception module 1720, the eye-feature detection module 1730, the pupil position detection module 1740, and the gaze detection module 1750 may be executed by a second processor, but the disclosure is not limited thereto.

For example, the gaze detection module 1500 may include another processor and memory, and the other processor may execute the light emission module 1710 and the light reception module 1720 which are stored in the memory, and the processor 1800 may execute the eye-feature detection module 1730, the pupil position detection module 1740, and the gaze detection module 1750 which are stored in the storage 1700.

The processor 1800 may execute the light emission module 1710 stored in the storage 1700 so as to allow the light emitter 1510 to emit IR light toward the eyes of the user. The processor 1800 may control the light emitter 1510 by executing the light emission module 1710, and the light emitter 1510 controlled by the processor 1800 may emit IR light so that the emitted IR light may cover the eyes of the user.

In an example case in which the light receiver 1520 is an IR camera, the light emitter 1510 may be an IR LED, and in order to allow the IR camera to photograph the eyes of the user, the processor 1800 may control the IR LED in such a manner that IR light emitted from the IR LED is to be emitted to an area including the eyes of the user. For example, in order for the IR light emitted from the IR LED to be emitted to the area including the eyes of the user, the processor 1800 may control an emission direction of the IR light emitted from the IR LED and may apply power to the IR LED, thereby controlling emission of the IR light from the IR LED.

According to an embodiment of the disclosure, for example, in order for the IR camera to photograph an entire area of the eyes of the user, the IR camera may be installed to face the waveguide 170 or the light reflector of the AR device 1000, and the IR LED may be installed to face the eyes of the user. The processor 1800 may emit the IR light by controlling the IR LED installed to face the eyes of the user.

In an example case in which the light receiver 1520 is an IR detector, the light emitter 1510 may be an IR scanner, and in order for the IR detector to be able to detect the eye of the user, the processor 1800 may control the IR scanner in such a manner that IR light emitted from the IR scanner is to be reflected by the waveguide 170 or the light reflector, and thus, is to scan the eyes of the user. For example, in order for IR light emitted from the IR scanner to scan the eyes of the user, the processor 1800 may control an emission direction of the IR light emitted from the IR scanner and may apply power to the IR scanner, thereby controlling emission of the IR light from the IR scanner.

The processor 1800 may execute the light reception module 1720 stored in the storage 1700 to allow the light receiver 1520 to receive light reflected from the eyes of the user. The processor 1800 may control the light receiver 1520 by executing the light reception module 1720, and the light receiver 1520 controlled by the processor 1800 may receive light reflected from the eyes of the user.

In an example case in which the light emitter 1510 is an IR LED, the light receiver 1520 may be an IR camera, and the processor 1800 may control the IR camera to photograph the eyes of the user via the light reflected from the eyes of the user.

The processor 1800 may execute the eye-feature detection module 1730 stored in the storage 1700 so as to detect features related to a gaze of the eyes of the user. For example, the processor 1800 may execute the eye-feature detection module 1730 so as to detect a position of a pupil feature point and a position of a glint feature point of an eye of the user. The pupil feature point may be a center point of the pupil, and the glint feature point may be a point having a brightness equal to or greater than a preset value from the detected area of the eye. The position of the pupil feature point and the position of the glint feature point may be identified by a coordinate value indicating a position in a coordinate system of the light receiver 1520. For example, the coordinate system of the light receiver 1520 may be a coordinate system of the IR camera or a coordinate system of the IR detector, and a coordinate value in the coordinate system of the light receiver 1520 may be a 2D coordinate value.

The processor 1800 may detect features related to the gaze of the eyes, by analyzing light received by the light receiver 1520. In an example case in which the light receiver 1520 is the IR camera, the processor 1800 may identify the position of the pupil feature point and the position of the glint feature point from an image captured by the IR camera. In an example case in which the light receiver 1520 is the IR detector, the processor 1800 may identify the position of the pupil feature point and the position of the glint feature point, by detecting IR light detected by the IR detector.

The processor 1800 may execute the pupil position detection module 1740 stored in the storage 1700 to detect a position of the pupil of the eye of the user. The pupil position detection module 1740 may identify the position of the pupil of the eye of the user, based on IR light emitted from the light reflector.

In an example case in which the light receiver 1520 is the IR camera, the pupil position detection module 1740 may identify the position of the pupil of the eye of the user in an image captured by the IR camera. In an example case in which the light receiver 1520 is the IR detector, the pupil position detection module 1740 may calculate the position of the pupil of the eye of the user by analyzing IR light sequentially obtained by the IR detector.

The pupil position detection module 1740 may identify the position of the pupil of the eye of the user by identifying a center point of the pupil of the eye of the user.

The processor 1800 may execute the gaze detection module 1750 stored in the storage 1700 to obtain gaze information of the user. The processor 1800 may execute the gaze detection module 1750 to calculate a position of a center of the eye of the user. The center of the eye of the user may be a center of an eyeball of the user.

The processor 1800 may execute the gaze detection module 1750 to calculate a position of a gaze point of the user. Also, a gaze direction of the user may be determined based on the position of the center of the eye and the gaze point of the user which are calculated by the gaze detection module 1750.

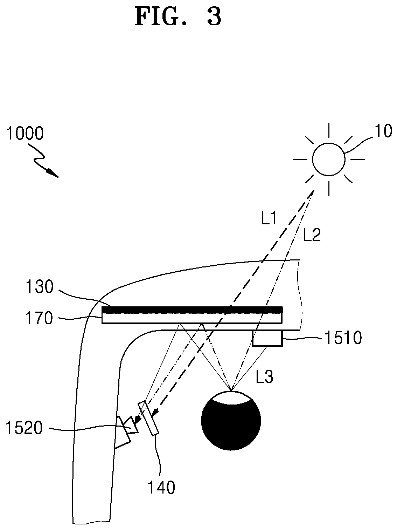

FIG. 3 is a conceptual diagram for describing in detail a configuration of an AR device, according to an embodiment of the disclosure.

For example, FIG. 3 is a conceptual diagram for describing a type of light obtained by the light receiver 1520 of the AR device 1000 to detect a gaze, and describing an operation in which noise light is blocked, according to an embodiment of the disclosure. For convenience of descriptions, descriptions that are redundant to descriptions of FIGS. 1 and 2 are simplified or omitted.

For example, FIG. 3 shows different types of light that are obtained by the light receiver 1520 of the AR device 1000. For example, the types of light may befirst light L1, second light L3, and third light L3. Definitions of the first light L1, the second light L3, and the third light L3 are described below.

Referring to FIG. 3, the AR device 1000 may include a gaze detection module including the waveguide 170, the light emitter 1510, and the light receiver 1520. The AR device may further include a first polarization plate 130 and a second polarization plate 140. According to an embodiment, the first polarization plate 130 and the second polarization plate 140 may block unnecessary noise light in detecting a gaze.

According to an embodiment of the disclosure, the first light L1 may be emitted from an external light source 10. The first light L1 may be unpolarized light. For example, the first light L1 may be natural light. However, the disclosure is not limited thereto, and as such, the first light L1 may include another type of light. For example, the first light L1 may be include artificial light. The first light L1 may include light generated by the external light source 10. The first light L1 may include the light propagating from the external light source 10 toward the light receiver 1520. For example, a path of the first light L1 may be directly (or straight) from the external light source 10 toward the light receiver 1520. The first light L1 may include the light that is not reflected by an eyeball of a user and travels from the external light source 10 toward the light receiver 1520. The first light L1 may be unnecessary noise light in detecting a gaze of the user. For example, the first light L1 may be noise light that adversely affects the gaze detection operation.

The first light L1 may be firstly polarized by the first polarization plate 130 provided on a straight path. The first light L1 may be linearly polarized by the first polarization plate 130. The first light L1 may be filtered to a polarization component that vibrates in a first direction, by the first polarization plate 130.

The first light L1 may be secondly polarized by the second polarization plate 140 placed on the straight path. The first light L1 may be linearly polarized by the second polarization plate 140. The first light L1 that is firstly polarized by the first polarization plate 130 may be blocked by the second polarization plate 140. The first light L1 may be filtered to a polarization component that vibrates in a second direction being perpendicular to the first direction, by the second polarization plate 140, and finally, the first light L1 may be blocked by the first polarization plate 130 and the second polarization plate 140. The first light L1 may not reach the light receiver 1520. For example, the AR device 1000 may block the first light L1 by using the first polarization plate 130 and the second polarization plate 140.

According to an embodiment of the disclosure, the second light L2 may be emitted from the external light source 10. The second light L2 may be unpolarized light, and for example, may be natural light. However, the disclosure is not limited thereto, and as such, the second light L2 may include another type of light. For example, the second light L2 may be include artificial light. The second light L2 may include light generated by the external light source 10. The second light L2 may include the light that is emitted from the external light source 10, is reflected by the eyeball of the user, and then travels toward the light receiver 1520. The second light L2 may include the light that does not pass through the first polarization plate 130. The first light L1 may be signal light used in detecting a gaze of the user. The AR device 1000 may receive the first light L1 by using the light receiver 1520, and may track the gaze of the user, based on the first light L1.

According to an embodiment of the disclosure, the third light L3 may be emitted from the light emitter 1510. The third light L3 may be, for example, IR light. However, the disclosure is not limited thereto, and as such, the third light L3 may include another type of light. The third light L3 may include light that is emitted from the light emitter 1510, is reflected by the eyeball of the user, and then travels toward the light receiver 1520. The third light L3 may include the light that does not pass through the first polarization plate 130. The third light L3 may be signal light used in detecting a gaze of the user. The AR device 1000 may receive the second light L2 by using the light receiver 1520, and may track the gaze of the user, based on the second light L2.

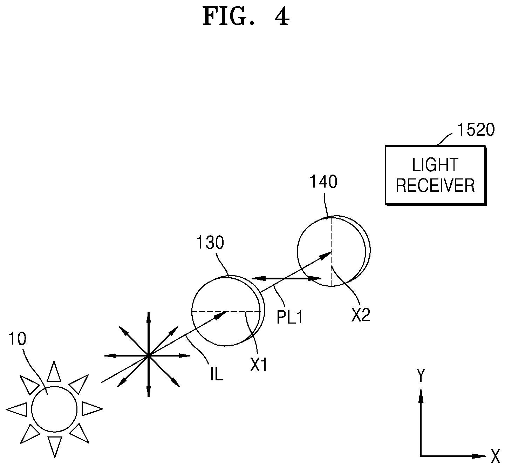

FIG. 4 is a conceptual diagram for describing a method of blocking noise, by a configuration of an AR device, according to an embodiment of the disclosure.

For example, FIG. 4 illustrates an operation in which incident light IL emitted from the external light source 10 is sequentially polarized by the first polarization plate 130 and the second polarization plate 140 according to an embodiment. The incident light IL of FIG. 4 may correspond to the first light L1 of FIG. 3. For convenience of descriptions, descriptions that are redundant to descriptions of FIGS. 1 to 3 are simplified or omitted.

Referring to FIG. 4, the incident light IL may be emitted from the external light source 10. The incident light IL may be unpolarized light, and for example, may be natural light. However, the disclosure is not limited thereto, and as such, the first light L1 may include another type of light. For example, the first light L1 may be include artificial light. The incident light IL may include light that travels straight from the external light source 10 toward the light receiver 1520. The incident light IL may be unnecessary noise light in detecting a gaze of the user. The incident light IL may be unpolarized light that includes a plurality of polarization components vibrating in respective directions.

The first polarization plate 130 may include a first polarization axis X1 extending in a first direction X. The first polarization plate 130 may polarize the incident light IL in the first direction X.

The incident light IL may be polarized in the first direction X by the first polarization plate 130. As the incident light IL passes through the first polarization plate 130, a polarization component vibrating in the first direction X may be transmitted, and a polarization component vibrating in a direction different from the first direction X may be blocked. Light of the incident light IL through which the polarization component vibrating in the first direction X is transmitted may be first polarization light PL1. The first polarization light PL1 may travel toward the light receiver 1520.

The second polarization plate 140 may include a second polarization axis X2 extending in a second direction Y. The second polarization plate 140 may polarize the first polarization light PL1 in the second direction Y. The second polarization plate 140 may polarize the first polarization light PL1, which vibrates in the first direction X, in the second direction Y, thereby blocking the first polarization light PL1.

The first polarization light PL1 may be polarized in the second direction Y by the second polarization plate 140. The second direction Y may be perpendicular to the first direction X. As the first polarization light PL1 passes through the second polarization plate 140, a polarization component that vibrates in the second direction Y may be transmitted, and a polarization component that vibrates in a direction different from the second direction Y may be blocked. Therefore, the first polarization light PL1 may be blocked by the second polarization plate 140.

The AR device 1000 may block the incident light IL by using the first polarization plate 130 and the second polarization plate 140. The incident light IL may be unnecessary light in detecting a gaze of the user. The AR device 1000 may block, as noise, the incident light IL to be transmitted to the light receiver 1520, and may obtain, via the light receiver 1520, only light which is necessary in detecting the gaze of the user. The AR device according to an embodiment of the disclosure may filter light to be used in detecting a gaze of a user, by blocking noise light, and the filtered light may be helpful in improving image sharpness for detecting the gaze of the user.

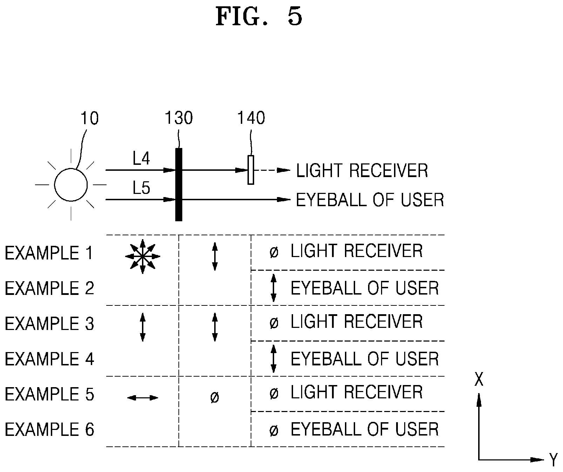

FIG. 5 is a conceptual diagram for describing a procedure in which noise is blocked, according to an embodiment of the disclosure.

For example, FIG. 5 illustrates in detail a shift in a polarization direction of light that passes through the first polarization plate 130 and the second polarization plate 140 according to an embodiment. For convenience of descriptions, descriptions that are redundant to descriptions of FIG. 4 are simplified or omitted.

According to an embodiment illustrated in FIG. 5, types of light emitted from an external light source are classified into fourth light L4 traveling toward a light receiver and fifth light L5 incident on an eyeball of a user.

According to an embodiment of the disclosure, the external light source 10 may emit light. The external light source 10 may be, for example, the sun. The external light source 10 may emit unpolarized light, may emit polarized light vibrating in a first direction X, or may emit polarized light vibrating in a second direction Y. The second direction Y may be perpendicular to the first direction X.

According to an embodiment of the disclosure, the fourth light L4 may be light that travels toward the light receiver. The fourth light L4 may be the first light L1 described with reference to FIG. 3. The fourth light L4 may act as noise in detecting, by an AR device, a gaze of a user. The AR device 1000 may be configured in such a manner that the first polarization plate 130 and the second polarization plate 140 are provided on a path of the fourth light L4, and the fourth light L4 may be blocked by the first polarization plate 130 and the second polarization plate 140.

In Example 1, the external light source 10 may emit the fourth light L4 that is unpolarized. The unpolarized fourth light L4 may be light that includes a plurality of polarization components that vibrate in respective directions. For example, the unpolarized fourth light L4 may vibrate in a plurality of directions. The unpolarized fourth light L4 may be polarized in a first direction by the first polarization plate 130. A polarization component of the unpolarized fourth light L4 which vibrates in the first direction may be transmitted by the first polarization plate 130, and a polarization component of the unpolarized fourth light L4 which vibrates in a direction different from the first direction may be transmitted by the second polarization plate 140.

The fourth light L4 polarized in the first direction X may be polarized in a second direction by the second polarization plate 140. The fourth light L4 polarized in the first direction X may be blocked by the second polarization plate 140. Therefore, the unpolarized fourth light L4 is blocked by the first polarization plate 130 and the second polarization plate 140, and does not reach the light receiver.

In Example 3, the external light source 10 may emit the fourth light L4 polarized in the first direction X. The fourth light L4 polarized in the first direction X may be polarized in the first direction by the first polarization plate 130. The fourth light L4 polarized in the first direction X may be fully transmitted by the first polarization plate 130.

The fourth light L4 polarized in the first direction X may be polarized in the second direction by the second polarization plate 140. The fourth light L4 polarized in the first direction X may be blocked by the second polarization plate 140. Therefore, the unpolarized fourth light L4 is blocked by the first polarization plate 130 and the second polarization plate 140, and does not reach the light receiver.

In Example 5, the external light source 10 may emit the fourth light L4 polarized in the second direction Y. The fourth light L4 polarized in the second direction Y may be polarized in the first direction by the first polarization plate 130. The fourth light L4 polarized in the second direction Y may be blocked by the first polarization plate 130. Therefore, the unpolarized fourth light L4 is blocked by the first polarization plate 130 and the second polarization plate 140, and does not reach the light receiver.

According to an embodiment of the disclosure, fifth light L5 may be light traveling toward the eyeball of the user. The user may secure a field of view, based on the fifth light L5. For example, the fifth light L5 may be image light emitted from a display device, and the user may view the image, based on the fifth light L5. The fifth light L5 may be used in securing the field of view for the user. In an example case in which the fifth light L5 does not reach the eyeball of the user, the user may not be able to secure the field of view based on the fifth light L5.

While both the fourth light L4 and the fifth light L5 are emitted from the external light source 10, the fourth light L4 may act as noise when reaching the light receiver, and thus, it is necessary to block the fourth light L4, and the fifth light L5 has to reach the eyeball of the user so as to secure the field of view for the user.

In Example 2, the external light source 10 may emit the fifth light L5 that is unpolarized. The unpolarized fifth light L5 may be light that includes a plurality of polarization components that vibrate in respective directions. The unpolarized fifth light L5 may be polarized in a first direction by the first polarization plate 130. A polarization component of the unpolarized fifth light L5 which vibrates in the first direction may be transmitted by the first polarization plate 130, and a polarization component of the unpolarized fifth light L5 which vibrates in a direction different from the first direction may be transmitted by the second polarization plate 140.

The fifth light L5 polarized in the first direction X may reach the eyeball of the user. The user may secure a front field of view, based on the fifth light L5 polarized in the first direction X. For example, the user may recognize image light polarized in the first direction X, and may view an image according to the image light.

In Example 4, the external light source 10 may emit the fifth light L5 polarized in the first direction X. The fifth light L5 polarized in the first direction X may be polarized in the first direction by the first polarization plate 130. The fifth light L5 polarized in the first direction X may be fully transmitted by the first polarization plate 130.

The fifth light L5 polarized in the first direction X may reach the eyeball of the user. The user may secure a front field of view, based on the fifth light L5 polarized in the first direction X. For example, the user may recognize image light polarized in the first direction X, and may view an image according to the image light.

In Example 5, the external light source 10 may emit the fifth light L5 polarized in the second direction Y. The fifth light L5 polarized in the second direction Y may be polarized in the first direction by the first polarization plate 130. The fifth light L5 polarized in the second direction Y may be blocked by the first polarization plate 130.

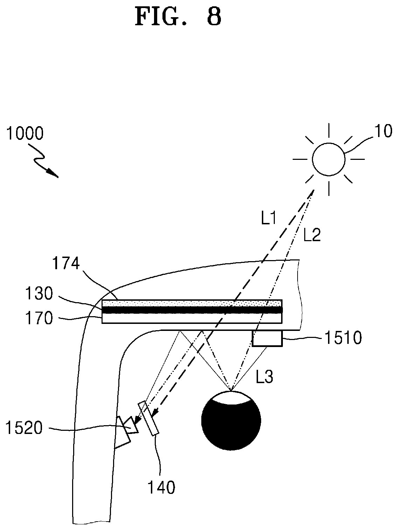

In example 6, the fifth light L5 may not reach the eyeball of the user. As the fifth light L5 is blocked, the user may not secure the front field of view. For example, the user may not recognize blocked image light, and may not view an image according to the image light. For example, an embodiment for improving Example 6 will be described below with reference to FIGS. 8 to 10.

FIG. 6 is a conceptual diagram for describing a method of blocking noise in an AR device, according to an embodiment of the disclosure.

For example, FIG. 6 illustrates an operation in which noise light is blocked, with respect to a function of the light reflector 172 of the AR device, according to an embodiment of the disclosure. For convenience of descriptions, descriptions that are redundant to descriptions of FIGS. 1 to 3 are simplified or omitted.

Referring to FIG. 6, the AR device 1000 may include the waveguide 170, and a gaze detection module including the light emitter 1510 and the light receiver 1520. The AR device 1000 may further include the light reflector 172, the first polarization plate 130, and the second polarization plate 140. The AR device 1000 may induce a large portion of light necessary for gaze detection to reach the light receiver 1520 and may induce a small portion of light unnecessary for gaze detection to reach the light receiver 1520, by using the light reflector 172. The AR device 1000 may block noise light unnecessary for gaze detection, by using the first polarization plate 130 and the second polarization plate 140.

The light reflector 172 may emit light emitted from the light emitter 1510 or the external light source 10. The light reflector 172 and the waveguide 170 may be provided to face an eye of the user, and may be attached to each other. For example, the light reflector 172 may be coated on at least a part of the waveguide 170. Also, the light reflector 172 may be attached to or coated on other elements excluding the waveguide included in the glasses-type AR device, the elements including a vision correction lens for correcting a vision or a cover glass installed to protect the waveguide.

The light reflector 172 may be formed with a material capable of reflecting IR light emitted from the light emitter 1510 or the external light source 10. The light reflector 172 may include, for example, silver, gold, copper, or a material including one or more of such metal materials, but the disclosure is not limited thereto. Accordingly, the IR light emitted from the light emitter 1510 may be reflected by the eye of the user and then may travel toward the light reflector 172, and the IR light reflected back from the light reflector 172 may travel toward the light receiver 1520. Alternatively, the first light L1 emitted from the external light source 10 may unnecessary noise light in detecting a gaze of a user and may be reflected by the light reflector 172, and then only a portion of the first light L1 may pass through the light reflector 172 and may proceed toward the light receiver 1520.

According to an embodiment of the disclosure, the first light L1 may be emitted from the external light source 10. The first light L1 may be firstly polarized in a first direction by the first polarization plate 130 provided on a straight path. The first light L1 may be reflected by the light reflector 172, and only a portion of the first light L1 may pass through the light reflector 172 and may proceed toward the light receiver 1520. The portion of the first light L1 having passed through the light reflector 172 may be secondly polarized in a second direction being perpendicular to the first direction, by the second polarization plate 140 provided on the straight path. The AR device 1000 may block the first light L1 by using the first polarization plate 130 and the second polarization plate 140.

According to an embodiment of the disclosure, the second light L2 may be light reflected from the eye of the user and travels toward the light receiver 1520. The second light L2 may be emitted from the external light source (10 or a not-shown separate light source). The second light L2 is emitted from the external light source and is reflected by an eyeball of the user. For example, the external light source may include an IR light source. The IR light source may be provided on a waveguide. The second light L2 may be reflected by the eyeball of the user and then may be reflected by the light reflector 172, and then may travel toward the light reflector 172. The light reflector 172 may increase reflection efficiency of the incident second light L2. The second light L2 may include light that travels toward the light receiver 1520. The second light L2 may include light that does not pass through the third polarization plate 130. The first light L1 may be signal light used in detecting a gaze of the user.

According to an embodiment of the disclosure, the third light L3 may be emitted from the light emitter 1510. The third light L3 may be, for example, IR light. The third light L3 is emitted from the light emitter 1510 and is reflected by the eyeball of the user. The third light L3 may be reflected by the eyeball of the user and then may be reflected by the light reflector 172, and then may travel toward the light receiver 1520. The light reflector 172 may improve reflection efficiency of the incident third light L3. The third light L3 may include light that travels toward the light receiver 1520. The third light L3 may include light that does not pass through the third polarization plate 130. The third light L3 may be signal light that is used in detecting a gaze of the user.

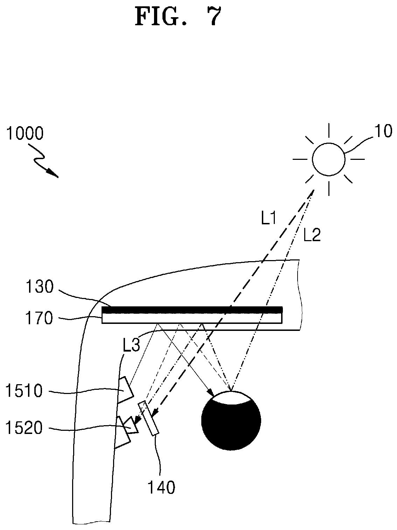

FIG. 7 is a conceptual diagram for describing a configuration of an AR device, according to an embodiment of the disclosure.

According to an embodiment of the disclosure, the light emitter 1510 may be provided on the temple 191. The light emitter 1510 and the light receiver 1520 used to detect the gaze of the user may be provided on a temple portion of the AR device 1000, and the AR device 1000 may effectively identify an eye of the user by using the light emitter 1510 and the light receiver 1520 provided on the temple portion. IR light may be emitted toward the waveguide 170 of the AR device 1000 from the light emitter 1510 provided on the temple portion. The emitted IR light is reflected by the waveguide 170, and thus, travels to the eye of the user. The IR light that is reflected from the eye of the user and then is reflected again by the waveguide 170 or a light reflector may be received by the light receiver 1520. Also, the AR device 1000 may obtain information about the eye of the user, based on the received IR light, and may detect a direction of the gaze of the user by using the obtained information about the eye.

According to an embodiment of the disclosure, third light L3 may be emitted from the light emitter 1510. The third light L3 may be, for example, IR light. The third light L3 is emitted from the light emitter 1510 toward the waveguide 170 or the light reflector 172, is reflected by the waveguide 170 or the light reflector 172, and then is reflected by an eyeball of the user. After the third light L3 is reflected by the eyeball of the user, the third light L3 may be reflected again by the waveguide 170 or the light reflector 172, and thus, may travel toward the light receiver 1520. The third light L3 may include light that does not pass through the third polarization plate 130. The third light L3 may be signal light used in detecting a gaze of the user.

FIG. 8 is a conceptual diagram for describing a configuration of an AR device, according to an embodiment of the disclosure.

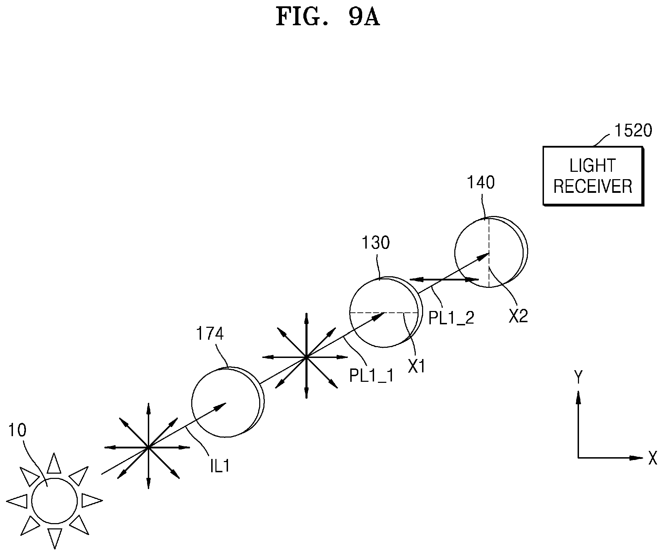

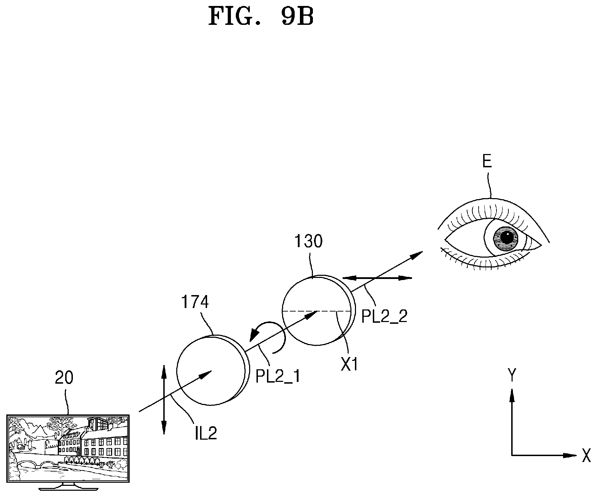

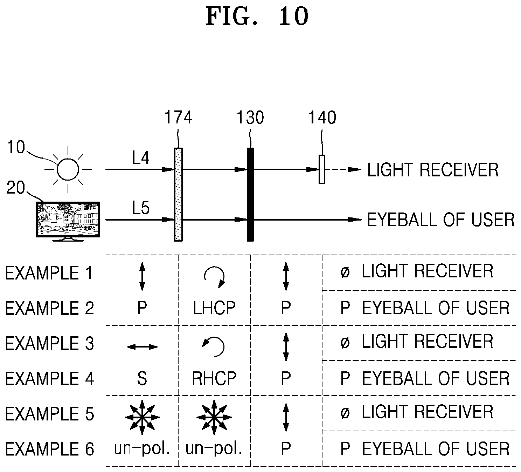

For example, FIG. 8 illustrates a function of a quarter-wave plate 174 of the AR device, and FIGS. 9A, 9B, and 10 are diagrams for describing in detail the function of the quarter-wave plate 174 and an operation of blocking noise light. For convenience of descriptions, descriptions that are redundant to descriptions of FIGS. 1 to 3 are simplified or omitted.

Referring to FIG. 8, the AR device 1000 may include the waveguide 170, and the gaze detection module including the light emitter 1510 and the light receiver 1520. The AR device 1000 may further include the quarter-wave plate 174, the first polarization plate 130, and the second polarization plate 140. The AR device 1000 may polarize, by using the quarter-wave plate 174, the first polarization plate 130, and the second polarization plate 140, light to be blocked as noise, the light being emitted from an external light source and then reaching the light receiver 1520. The AR device 1000 may polarize, by using the quarter-wave plate 174, light to be transmitted for a front field of view of a user, the light being emitted from the external light source and then reaching an eyeball of the user.

The quarter-wave plate 174 is configured to phase-shift incident light by 90°. The quarter-wave plate 174 is configured to circularly polarize transmitted linearly-polarized light. In an example case in which circularly-polarized light is incident, the quarter-wave plate 174 may shift the circularly-polarized light to linearly-polarized light. For example, light emitted from the external light source at the front of the AR device 1000 may pass through the quarter-wave plate 174, and thus, may be circularly polarized.

According to an embodiment of the disclosure, the quarter-wave plate 174, the first polarization plate 130, and the second polarization plate 140 may be sequentially provided on a path on which first light L1 directly emitted from the external light source 10 toward the light receiver 1520 reaches the light receiver 1520. The quarter-wave plate 174 may be provided on the waveguide 170.

FIG. 9A is a conceptual diagram for describing a method of blocking noise, by a configuration of an AR device, according to an embodiment of the disclosure.

FIG. 9A illustrates an operation in which first incident light IL1 emitted from the external light source 10 (hereinafter, also referred to as the first external light source 10) is sequentially polarized by the quarter-wave plate 174, the first polarization plate 130, and the second polarization plate 140. FIG. 9A is a conceptual diagram particularly showing a path of the first incident light IL1 traveling from the first external light source 10 toward the light receiver 1520.

Referring to FIG. 9A, according to an embodiment of the disclosure, the first light (see L1 of FIG. 8) may include the first incident light IL1.

The first incident light IL1 may be noise light that is light emitted from the first external light source 10. The first incident light IL1 may be unpolarized light, and for example, may be natural light. The first incident light IL1 may include the light traveling straight from the first external light source 10 toward the light receiver 1520. The first incident light IL1 may include the light that is not reflected by an eyeball of a user and travels from the first external light source 10 toward the light receiver 1520. The first incident light IL1 may be unnecessary noise in detecting a gaze of the user.

According to an embodiment of the disclosure, the first incident light IL1 may be firstly polarized by the quarter-wave plate 174 provided on the straight path The first incident light IL1 may be circularly polarized by the quarter-wave plate 174. Here, the first incident light IL1 may be unpolarized light that includes a plurality of polarization components vibrating in respective directions, and light polarized from the first incident light IL1 by the quarter-wave plate 174 may be unpolarized light that still includes the plurality of polarization components vibrating in respective directions. The light circularly polarized from the first incident light IL1 by the quarter-wave plate 174 may be first polarized light PL1_1. The first polarized light PL1_1 may travel toward the light receiver 1520.

The first polarized light PL1_1 may be secondly polarized by the first polarization plate 130 provided on the straight path. The first polarized light PL1_1 may be linearly polarized by the first polarization plate 130. The first polarized light PL1_1 may be filtered to a polarization component that vibrates in a first direction, by the first polarization plate 130. Light that is polarized from the first polarized light PL1_1 by the first polarization plate 130 may be second polarized light PL1_2. The second polarized light PL1_2 may travel toward the light receiver 1520.

The second polarized light PL1_2 may be thirdly polarized by the second polarization plate 140 provided on the straight path. The second polarized light PL1_2 may be linearly polarized by the second polarization plate 140. The second polarized light PL1_2 that is secondly polarized by the first polarization plate 130 may be blocked by the second polarization plate 140. The second polarized light PL1_2 may be filtered to a polarization component that vibrates in a second direction being perpendicular to the first direction, by the second polarization plate 140, and finally, the first incident light IL1 may be blocked by the quarter-wave plate 174, the first polarization plate 130, and the second polarization plate 140. The first incident light IL1 may not reach the light receiver 1520. That is, the AR device 1000 may block the first incident light IL1 by using the quarter-wave plate 174, the first polarization plate 130, and the second polarization plate 140.

FIG. 9B is a conceptual diagram for describing a method of securing a field of view of a user, by a configuration of an AR device, according to an embodiment of the disclosure. For convenience of descriptions, descriptions being different from those of FIG. 9A will now be provided.

FIG. 9B illustrates an operation in which second incident light IL2 emitted from a second external light source 20 is sequentially polarized by the quarter-wave plate 174 and the first polarization plate 130. FIG. 9B is a conceptual diagram particularly showing a path of the second incident light IL2 traveling from the second external light source 20 toward an eye E of a user.

Referring to FIG. 9B, according to an embodiment of the disclosure, the second incident light IL2 may be light that is emitted from the second external light source 20 and then travels toward the eye E of the user. The user may secure a front field of view over the AR device, by the second incident light IL2.

The second incident light IL2 may include the light emitted from the second external light source 20. The second incident light IL2 may be, for example, light polarized in a second direction Y, and may be, for example, light with respect to an image which is emitted from a display device. The second incident light IL2 may include light traveling straight from the second external light source 20 toward the eyeball of the user. The second incident light IL2 may be light for the user to recognize the second external light source 20. The user may recognize the second external light source 20, based on the second incident light IL2.

According to an embodiment of the disclosure, the second incident light IL2 may be firstly polarized by the quarter-wave plate 174 provided on a straight path. The second incident light IL2 may be circularly polarized by the quarter-wave plate 174. For example, the second incident light IL2 incident on the quarter-wave plate 174 may be polarized according to right-handed circular polarization (RHCP) by the quarter-wave plate 174. Light circularly polarized from the second incident light IL2 by the quarter-wave plate 174 may be first polarized light PL2_1. The first polarized light PL2_1 may travel toward the light receiver 1520.

The first polarized light PL2_1 may be secondly polarized by the first polarization plate 130 provided on the straight path. The first polarized light PL2_1 may be linearly polarized by the first polarization plate 130. The first polarized light PL2_1 may be filtered to a polarization component that vibrates in a first direction, by the first polarization plate 130.

As the first polarized light PL2_1 that has been a polarization component vibrating in a second direction is circularly polarized by the quarter-wave plate 174, even in a case in which the first polarized light PL2_1 is polarized by the first polarization plate 130, the polarization component vibrating in the first direction may pass through the first polarization plate 130. The transmitted polarization component of the first polarized light PL2_1 in the first direction may be second polarized light PL2_2. The second polarized light PL2_2 may reach an eyeball of the user. The user may recognize the second external light source 20, based on the second polarized light PL2_2.

FIG. 10 is a conceptual diagram for describing a process of blocking noise, according to an embodiment of the disclosure.

FIG. 10 illustrates a shift in a polarization direction of light that passes through the quarter-wave plate 174, the first polarization plate 130 and the second polarization plate 140 according to an embodiment. For convenience of descriptions, descriptions that are redundant to descriptions of FIGS. 5 and 9 are simplified or omitted.

According to an embodiment illustrated in FIG. 10, types of light emitted from an external light source are classified into fourth light L4 traveling toward a light receiver and fifth light L5 incident on an eyeball of a user. In detail, the types of light are classified into the fourth light L4 emitted from the first external light source 10 and then traveling toward the light receiver and the fifth light L5 emitted from the second external light source 20 and then being incident on the eyeball of the user.

According to an embodiment of the disclosure, the external light source including the first external light source 10 and the second external light source 20 may emit light. The external light source may be, for example, the sun, or, may be, as another example, a display. The external light source may emit unpolarized light, may emit polarized light vibrating in a first direction X, or may emit polarized light vibrating in a second direction Y. The second direction Y may be perpendicular to the first direction X.

According to an embodiment of the disclosure, the fourth light L4 may be light traveling toward the light receiver 1520. The fourth light L4 may be the first incident light IL1 described with reference to FIG. 9A. The fourth light L4 may act as noise in detecting, by an AR device, a gaze of the user. The AR device 1000 may be configured in such a manner that the quarter-wave plate 174, the first polarization plate 130, and the second polarization plate 140 are provided on a path of the fourth light L4, and the fourth light L4 may be blocked by the quarter-wave plate 174, the first polarization plate 130, and the second polarization plate 140.

In detail, in Example 1, the first external light source 10 may emit the fourth light L4 that is polarized in the first direction X. The fourth light L4 polarized in the first direction X may be circularly polarized according to left-handed circular polarization (LHCP) by the quarter-wave plate 174.

The fourth light L4 circularly polarized according to LHCP may be polarized in the first direction X by the first polarization plate 130.

The fourth light L4 polarized in the first direction X may be polarized in a second direction by the first polarization plate 130 the second polarization plate 140. The fourth light L4 polarized in the first direction X may be blocked by the second polarization plate 140. Therefore, the unpolarized fourth light L4 is blocked by the first polarization plate 130 the second polarization plate 140, and does not reach the light receiver 1520.

In Example 3, the external light source 10 may emit the fourth light L4 emitted in the second direction Y. The fourth light L4 polarized in the second direction Y may be circularly polarized according to RHCP by the quarter-wave plate 174.

The fourth light L4 polarized according to RHCP may be polarized in the first direction X by the first polarization plate 130.

The fourth light L4 polarized in the first direction X may be polarized in the second direction by the second polarization plate 140. The fourth light L4 polarized in the first direction X may be blocked by the second polarization plate 140. Therefore, the unpolarized fourth light L4 is blocked by the first polarization plate 130 and the second polarization plate 140, and does not reach the light receiver 1520.

In Example 5, the first external light source 10 may emit the unpolarized fourth light L4. The unpolarized fourth light L4 may be light that includes a plurality of polarization components that vibrate in respective directions. The unpolarized fourth light L4 may be phase-shifted by 90° by the quarter-wave plate 174. The unpolarized fourth light L4 polarized by the quarter-wave plate 174 which is a result obtained by phase-shifting each of the plurality of polarization components of the unpolarized fourth light L4 by 90° may be unpolarized light that still includes the plurality of polarization components vibrating in respective directions.

The unpolarized fourth light L4 may be polarized in a first direction by the first polarization plate 130. A polarization component of the unpolarized fourth light L4 which vibrates in the first direction may be transmitted by the first polarization plate 130, and a polarization component of the unpolarized fourth light L4 which vibrates in a direction different from the first direction may be blocked by the first polarization plate 130.

The fourth light L4 polarized in the first direction X may be polarized in the second direction by the second polarization plate 140. The fourth light L4 polarized in the first direction X may be blocked by the second polarization plate 140. Therefore, the unpolarized fourth light L4 is blocked by the first polarization plate 130 and the second polarization plate 140, and does not reach the light receiver 1520.

According to an embodiment of the disclosure, fifth light L5 may be light traveling toward the eyeball of the user. The user may secure a field of view, based on the fifth light L5. For example, the fifth light L5 may be image light emitted from a display device, and the user may view the image, based on the fifth light L5. The fifth light L5 may be used in securing the field of view for the user. In an example case in which the fifth light L5 does not reach the eyeball of the user, the user may not be able to secure the field of view based on the fifth light L5.

While the fourth light L4 and the fifth light L5 are emitted from respective external light sources, the fourth light L4 may act as noise when reaching the light receiver 1520, and thus, it is necessary to block the fourth light L4, and the fifth light L5 has to reach the eyeball of the user so as to secure the field of view for the user. The AR device 1000 may be configured in such a manner that the quarter-wave plate 174, the first polarization plate 130, and the second polarization plate 140 are sequentially provided on a path of the fourth light L4, and the fourth light L4 may be blocked by the quarter-wave plate 174, the first polarization plate 130, and the second polarization plate 140. The AR device 1000 may be configured in such a manner that the quarter-wave plate 174 and the first polarization plate 130 are sequentially provided on a path of the fifth light L5, and fifth light L5 may be blocked by the quarter-wave plate 174 and the first polarization plate 130.

In detail, in Example 2, the second external light source 20 may emit the fifth light L5 polarized in the first direction X. The fifth light L5 polarized in the first direction X may be circularly polarized according to LHCP by the quarter-wave plate 174.

The fifth light L5 circularly polarized according to LHCP may be polarized in the first direction X by the first polarization plate 130. The fifth light L5 polarized in the first direction X may reach the eyeball of the user. The user may secure a front field of view, based on the fifth light L5 polarized in the first direction X. For example, the user may recognize image light L12 polarized in the first direction X, and may view an image according to the image light L12.

In Example 4, the second external light source 20 may emit the fifth light L5 polarized in the second direction Y. The fifth light L5 polarized in the second direction Y may be circularly polarized according to RHCP by the quarter-wave plate 174.

The fifth light L5 circularly polarized according to RHCP may be polarized in the first direction X by the first polarization plate 130. The fifth light L5 polarized in the first direction X may reach the eye of the user. The user may secure a front field of view, based on the fifth light L5 polarized in the first direction X. For example, the user may recognize the image light L12 polarized in the first direction X, and may view an image according to the image light.

In example 6, the second external light source 20 may emit the unpolarized fifth light L5. The unpolarized fifth light L5 may be light that includes a plurality of polarization components that vibrate in respective directions. The unpolarized fifth light L5 may be phase-shifted by 90° by the quarter-wave plate 174. The unpolarized fifth light L5 polarized by the quarter-wave plate 174 which is a result obtained by phase-shifting each of the plurality of polarization components of the unpolarized fifth light L5 by 90° may be unpolarized light that still includes the plurality of polarization components vibrating in respective directions.

The unpolarized fifth light L5 may be polarized in a first direction by the first polarization plate 130. A polarization component of the unpolarized fifth light L5 which vibrates in the first direction may be transmitted by the first polarization plate 130, and a polarization component of the unpolarized fifth light L5 which vibrates in a direction different from the first direction may be blocked by the first polarization plate 130.

The fifth light L5 polarized in the first direction X may reach the eyeball of the user. The user may secure a front field of view, based on the fifth light L5 polarized in the first direction X. For example, the user may recognize the image light L12 polarized in the first direction X, and may view an image according to the image light.

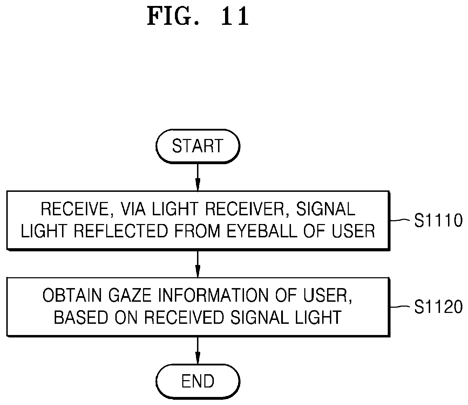

FIG. 11 is a flowchart for describing an operation of blocking noise, according to an embodiment of the disclosure.

For convenience of descriptions, descriptions that are redundant to descriptions of FIGS. 1 to 10 are simplified or omitted.

Referring to FIG. 11, in operation S1110, the method may include receiving light reflected from an eyeball of a user. For example, an AR device may receive, via a light receiver, light reflected from an eyeball of a user.

According to an embodiment of the disclosure, the AR device may include a waveguide and a processor for providing a user with an AR, a gaze detection module including a light emitter and a light receiver for detecting a gaze of the user, and a first polarization plate and a second polarization plate for filtering out noise from light to be received by the light receiver.

The light emitter may emit light. For example, the light emitter may be provided on a waveguide, and may emit light toward an eye of the user. The light emitted from the light emitter may be reflected by the eye of the user, may be reflected by the waveguide, and then may be received by the light receiver. According to an embodiment of the disclosure, a light reflector is attached on the waveguide, so that reflection efficiency of the light may be increased.

An external light source may also emit light toward the eye of the user. The light emitted from the external light source may be reflected by the eye of the user, may be reflected by the waveguide, and then may be received by the light receiver. According to an embodiment of the disclosure, the light reflector is attached on the waveguide, so that reflection efficiency of the light may be increased.

Light may be emitted from the light emitter or the external light source toward an eyeball of the user. The light reflected by the eyeball of the user may be signal light used in tracking a gaze of the user.

According to an embodiment of the disclosure, noise light may be emitted from the external light source toward the light receiver. The noise light may be unnecessary noise in tracking the gaze of the user. The AR device may block the noise light by using a first polarization plate and a second polarization plate.

Light traveling toward the light receiver may include the signal light and the noise light. According to an embodiment of the disclosure, the AR device may block the noise light by using the first polarization plate and the second polarization plate, and may obtain gaze information of the user, based on the signal light obtained by using the light receiver. According to an embodiment of the disclosure, the AR device may block the noise light by using a quarter-wave plate, the first polarization plate, and the second polarization plate, and may obtain the gaze information of the user, based on the signal light obtained by using the light receiver.

For example, the AR device may polarize the noise light in a first direction by using the first polarization plate. The AR device may polarize the noise light in a second direction by using the second polarization plate. The second direction may be perpendicular to the first direction. Therefore, the noise light polarized in the first direction by the first polarization plate may be blocked by the second polarization plate that polarizes incident light in the second direction. The AR device may block the noise light by using the first polarization plate and the second polarization plate.

In operation S1120, the method may include obtaining the gaze information of the user, based on the received light. For example, the AR device may obtain the gaze information of the user, based on the received signal light.

According to an embodiment of the disclosure, the received signal light does not include noise light that is directly emitted from the external light source to the light receiver. The received signal light may be light reflected from the eyeball of the user, and may be used in detecting the gaze of the user. The AR device may obtain the gaze information of the user, based on the received signal light.

According to an embodiment of the disclosure, the AR device may detect features related to the gaze of the eye of the user. For example, the AR device may detect a position of a pupil feature point and a position of a glint feature point of the eye of the user. The pupil feature point may be a center point of the pupil, and the glint feature point may be a point having a brightness equal to or greater than a preset value from the detected area of the eye. The position of the pupil feature point and the position of the glint feature point may be identified by a coordinate value indicating a position in a coordinate system of the light receiver. For example, the coordinate system of the light receiver may be a coordinate system of the IR camera or a coordinate system of the IR detector, and a coordinate value in the coordinate system of the light receiver may be a 2D coordinate value.

The AR device may detect features related to the gaze of the eyes, by analyzing light received by the light receiver. In an example case in which the light receiver is the IR camera, the AR device may identify the position of the pupil feature point and the position of the glint feature point from an image captured by the IR camera.

The AR device may detect a position of the pupil of the eye of the user, based on the received signal light. In an example case in which the light receiver is the IR camera, the AR device may identify the position of the pupil of the eye of the user in an image captured by the IR camera.

The AR device may identify the position of the pupil of the eye of the user by identifying a center point of the pupil of the eye of the user, based on the received signal light.

The AR device may obtain the gaze information of the user, based on the received signal light. The AR device may calculate a position of a center of the eye of the user. The center of the eye of the user may be a center of an eyeball of the user.

The AR device may calculate a position of a gaze point of the user. Also, a gaze direction of the user may be determined based on the calculated position of the center of the eye and the calculated gaze point of the user.

According to an embodiment of the disclosure, an AR device may include a waveguide, a support part, a light receiver, a first polarization plate, a second polarization plate, and at least one processor. The support part may be configured to fix the AR device to a user face. The light receiver may be installed at the support part. The first polarization plate may be configured to polarize noise light traveling toward the light receiver; and the second polarization plate may be configured to block the polarized noise light from the first polarization plate from reaching the light receiver. The at least one processor may be configured to obtain gaze information of a user, based on light reflected from an eyeball of the user and obtained via the light receiver. Noise light traveling toward the light receiver may be linearly polarized in a first direction by the first polarization plate. Light linearly polarized from the noise light may be blocked by the second polarization plate.

According to an embodiment of the disclosure, the support part may include a temple extending from a frame adjacent to the waveguide and provided on an ear of the user. The support part may include a nose support part extending from the frame and provided on a nose of the user. The light receiver may be installed at the temple.

According to an embodiment of the disclosure, the first polarization plate may be provided on the waveguide.

According to an embodiment of the disclosure, the second polarization plate may be provided on the light receiver.

According to an embodiment of the disclosure, the first polarization plate and the second polarization plate may be sequentially provided on a path of the noise light emitted from an external light source toward the light receiver.

According to an embodiment of the disclosure, the first polarization plate may be configured to linearly polarize transmitted light in the first direction. The second polarization plate may be configured to linearly polarize transmitted light in a second direction being perpendicular to the first direction.

According to an embodiment of the disclosure, the AR device may further include a light reflector coated on the waveguide.

According to an embodiment of the disclosure, the AR device may further include a light emitter. The light obtained via the light receiver may include first signal light emitted from the external light source and reflected from the eyeball of the user, and second signal light emitted from the light emitter and reflected from the eyeball of the user.

According to an embodiment of the disclosure, the light emitter may be provided on the waveguide.

According to an embodiment of the disclosure, the support part may include the temple extending from the frame adjacent to the waveguide and provided on the ear of the user. The light emitter may be provided on the temple.

According to an embodiment of the disclosure, the AR device may further include a quarter-wave plate configured to circularly polarize transmitted light. The noise light may be circularly polarized by the quarter-wave plate. Light circularly polarized from the noise light may be linearly polarized in the first direction by the first polarization plate. The light linearly polarized from the noise light may be blocked by the second polarization plate.

According to an embodiment of the disclosure, the quarter-wave plate, the first polarization plate, and the second polarization plate may be sequentially provided on a path of the noise light emitted from the external light source toward the light receiver.

According to an embodiment of the disclosure, the quarter-wave plate may be provided on the waveguide.

According to an embodiment of the disclosure, a method may include obtaining gaze information of the user, based on light reflected from an eyeball of the user and obtained by a light receiver, linearly polarizing, by a first polarization plate, noise light traveling toward the light receiver, and blocking, by a second polarization plate, the linearly polarized noise light from reaching the light receiver.

According to an embodiment of the disclosure, the noise light may be blocked by the first polarization plate and the second polarization plate that are sequentially provided on a path on which the noise light directly emitted from an external light source toward the light receiver reaches the light receiver.

According to an embodiment of the disclosure, the first polarization plate may be configured to linearly polarize transmitted light in the first direction. The second polarization plate may be configured to linearly polarize transmitted light in a second direction being perpendicular to the first direction.

According to an embodiment of the disclosure, the light obtained via the light receiver may include first signal light emitted from the external light source and reflected from the eyeball of the user, and second signal light emitted from a light emitter and reflected from the eyeball of the user.

According to an embodiment of the disclosure, the noise light may be circularly polarized by a quarter-wave plate configured to circularly polarize transmitted light. Light circularly polarized from the noise light may be linearly polarized in the first direction by the first polarization plate. The light linearly polarized from the noise light may be blocked by the second polarization plate.

According to an embodiment of the disclosure, the noise light may be blocked by the quarter-wave plate, the first polarization plate, and the second polarization plate that are sequentially provided on a path on which the noise light directly emitted from the external light source toward the light receiver reaches the light receiver.

In order to solve the aforementioned problems, an embodiment of the disclosure provides a computer-readable recording medium having recorded thereon a program to be executed on a computer.

A machine-readable storage medium may be provided in the form of a non-transitory storage medium. In this regard, the term "non-transitory storage medium" merely means that the storage medium is a tangible device, and does not include a signal (e.g., an electromagnetic wave), and this term does not differentiate between a case where data is semi-permanently stored in the storage medium and a case where the data is temporarily stored in the storage medium. For example, the non-transitory storage medium may include a buffer in which data is temporarily stored.

According to an embodiment of the disclosure, the method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM), or be distributed (e.g., downloaded or uploaded) online via an application store, or between two user devices (e.g., smart phones) directly. For electronic distribution, at least a part of the computer program product (e.g., a downloadable app) may be temporarily generated or be at least temporarily stored in a machine-readable storage medium, e.g., a server of a manufacturer, a server of an application store, or memory of a relay server.

## Claims

1. An augmented reality (AR) device comprising:
a waveguide;
a support part configured to fix the AR device to a face of a user;
a light receiver provided on the support part;
at least one processor configured to obtain gaze information of the user, based on light reflected from an eyeball of the user and obtained by the light receiver;
a first polarization plate configured to polarize noise light traveling toward the light receiver; and
a second polarization plate configured to block the polarized noise light from the first polarization plate from reaching the light receiver.

2. The AR device of claim 1, wherein the first polarization plate is provided on the waveguide.

3. The AR device of any one of claims 1 to 2, wherein the second polarization plate is provided on the light receiver.

4. The AR device of any one of claims 1 to 3, wherein the first polarization plate and the second polarization plate are sequentially placed on a path of the noise light emitted from an external light source toward the light receiver.

5. The AR device of any one of claims 1 to 4, wherein
the first polarization plate is configured to linearly polarize the noise light in a first direction, and
the second polarization plate is configured to linearly polarize the linearly polarized noise light in a second direction perpendicular to the first direction.

6. The AR device of any one of claims 1 to 5, further comprising:
a light reflector coated on the waveguide.

7. The AR device of any one of claims 1 to 6, further comprising:
a quarter-wave plate configured to circularly polarize the noise light,
wherein the first polarization plate is configured to linearly polarize the circularly polarized noise light in a first direction, and
wherein the second polarization plate is configured to block the linearly polarized noise light from the first polarization plate.

8. The AR device of claim 7, wherein the quarter-wave plate, the first polarization plate, and the second polarization plate are sequentially provided on a path of the noise light emitted from an external light source toward the light receiver.

9. The AR device of any one of claims 7 and 8, wherein the quarter-wave plate is provided on the waveguide.

10. A method of tracking a gaze of a user, the method comprising:
obtaining gaze information of the user, based on light reflected from an eyeball of the user and obtained by a light receiver;
linearly polarizing, by a first polarization plate, noise light traveling toward the light receiver; and
blocking, by a second polarization plate, the linearly polarized noise light from reaching the light receiver.

11. The method of claim 10, wherein the first polarization plate and the second polarization plate are sequentially provided on a path of the noise light emitted from an external light source toward the light receiver.

12. The method of any one of claims 10 and 11, further comprising:
linearly polarizing, by the first polarization plate, the noise light in a first direction, and
linearly polarizing, by the second polarization plate, the linearly polarized noise light in a second direction perpendicular to the first direction.

13. The method of any one of claims 10 to 12, further comprising:
circularly polarizing, by a quarter-wave plate, the noise light,
linearly polarizing, by the first polarization plate, the circularly polarized noise light in a first direction, and
linearly polarizing, by the second polarization plate, the linearly polarized noise light in a second direction perpendicular to the first direction.

14. The method of claim 13, wherein the noise light is blocked by the quarter-wave plate, the first polarization plate, and the second polarization plate that are sequentially provided on a path of the noise light emitted from an external light source toward the light receiver.

15. A computer-readable recording medium having recorded thereon a program for performing, on a computer, the method of any one of claims 10 to 14.
